(19) Europäisches Patentamt
European Patent Office
Office européen des brevets

(11) **EP 3 972 065 A1**

(12) **EUROPEAN PATENT APPLICATION**
published in accordance with Art. 153(4) EPC

(43) Date of publication:
**23.03.2022 Bulletin 2022/12**

(51) Int Cl.:
**H02B 1/00** *(2006.01)*

(21) Application number: **20845069.2**

(22) Date of filing: **20.07.2020**

(86) International application number:
**PCT/ES2020/070469**

(87) International publication number:
**WO 2021/014043 (28.01.2021 Gazette 2021/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.07.2019 ES 201930691**

(71) Applicant: **EOS ITR, S.L.**
**08022 Barcelona (ES)**

(72) Inventor: **OLMOS DE BONILLA, Carlos**
**08022 BARCELONA (ES)**

(74) Representative: **Ingenias Creaciones Signos e Invenciones S.L.P.**
**Av. Diagonal, 514-1º**
**08006 Barcelona (ES)**

(54) **ELECTRIC CIRCUIT FOR POWERING CENTRIFUGAL PUMPS**

(57) An electric circuit for powering centrifugal pumps, which comprises a power panel (2) of the pump (1), which is connected to an alternating-current distribution network (3) and to the said pump (1) by means of a power line (4) provided with a timer (5) that regulates the operating time of the pump (1); which further comprises a solar module comprising photovoltaic panels (6) and a solar micro-inverter (7) connected in parallel to the alternating-current bus of the pump (1), which converts the direct current generated by the solar module into alternating current and injects same into the pump power line (4), with the same values of voltage, frequency and phase-angle deviation as the current from the distribution network (3), when the timer activates the operation of the pump.

Fig. 1

## Description

## Technical Field

The invention is framed in the electrical sector, more specifically in the sector of powering circuits specially designed to supply the electrical energy consumed by centrifugal pumps, driven by alternating-current (AC) motors.

## Prior state-of-the-art

Any water pump can be powered from a photovoltaic generator. A first approximation to its classification distinguishes between those powered with direct current (DC) and those powered with alternating current (AC).

DC powered pumps are of positive displacement (membrane, piston, eccentric helical screw...) and cover small applications, less than 500 $m^4$/day and their market is linked to recreation (boats, caravans, secondary dwellings...) where operating times are usually limited to a few hours a day, a few days a year, which means low reliability requirements. Conversely, the market for the supply to towns, industrial and agricultural applications is covered with centrifugal pumps driven by alternating current (AC) powered induction motors.

The centrifugal pump is currently the most widely used machine for pumping liquids in general. Centrifugal pumps are always rotary and transform the mechanical energy of an impeller into kinetic or pressure energy of an incompressible fluid. These centrifugal pumps have a multitude of applications in industry as they are suitable for almost any use. The most common are those made with a single impeller, covering capacities up to 500 $m^3$/h and manometric heads up to 100 m, with electric motors of standardised speed.

These pumps are powered directly from the network or through variable frequency drives, which allow them to be controlled (ramp starting and stopping, detection of anomalous situations...). A variable frequency drive (VFD) or adjustable frequency drive (AFD) is a system for controlling the rotational speed of an (AC) alternating-current motor by controlling the power frequency supplied to the motor.

Standard frequency drives are designed to be powered from the conventional mains and incorporate an AC/DC converter and use an output to generate the wave with which they ultimately control the motors. To power these drives with photovoltaic generators, they must be connected directly to their internal DC bus, ensuring that the operating voltage of the photovoltaic generator is greater than $^*\sqrt{2}\ 230V = 325V$ (monophasic) or $3\sqrt{2}\bullet 400V = 540V$ (triphasic). Therefore, to reach these voltages, about 9 modules (3.015 kWp and 15.3 $m^2$) are required for a monophasic motor and 15 modules (5.025 kWp and 25.5 $m^2$) for a triphasic motor.

In summary, photovoltaic systems for pumps currently have two problems: On the one hand, they are only used in direct current (DC) installations, of small size and little use for a few hours and of low volume; on the other hand, they require a high photovoltaic power involving a large photovoltaic generator surface, and a variable speed device (expensive equipment).

Document CN 208478886 U discloses a high and low voltage power distribution cabinet including a body with a heat dissipation window; a lower dust collection device, a front door, and a solar panel mounted on the top of the cabinet body and a connection between the power distribution cabinet body and the solar panel. It also comprises a lightning rod, a battery placed under the solar panel, a lower wheel and a dust collection device.

Document CN 208835541 U provides an outdoor switch cabinet, which has a solar panel and can display video content, such as advertisements, by configuring a liquid crystal display, increasing the ornamental property of the switch cabinet and improving economic efficiency, and can receive 4G signals by establishing a 4G portable point that converts 4G data traffic to Wi-Fi signal for use by nearby persons.

Utility model CN 204668784 discloses an outdoor garden high-low voltage power distribution cabinet of solar energy power supply cooling, with a solar photovoltaic panel, an inverter 20, and a storage battery 18.

## Summary of the invention

The circuit for powering centrifugal pumps object of this invention is of the type described in the preamble of claim 1 and comprises a power panel of the pump connected to an alternating current distribution network, and to said pump through a power line provided with a timer that regulates the operating time of the pump.

According to the invention this power circuit comprises at least one solar module of photovoltaic panels and a solar micro-inverter connected in parallel to the alternating current bus of the pump and which converts the direct current generated by the solar module into alternating current, said inverter performing the injection of alternating current to the pump power line, with the same values of voltage, frequency and phase-angle deviation as the current coming from the distribution network, when the timer activates the operation of the pump.

When the timer allows the passage of current from the distribution network to the pump, the micro-inverter synchronises with the electrical network, working in parallel to the network and reducing the alternating current consumption of the distribution network by the pump, depending on the irradiance received by the solar panels to which said micro-inverter is connected.

With the aforementioned characteristics, the operating principle of the power circuit of the invention is as follows:
When the pump is activated:

- The micro-inverter detects voltage in the power line;

- the micro-inverter checks that the values of voltage, frequency, and phase-angle deviation are within the accepted values

- the inverter connects to the network, and synchronises with it

- the inverter injects the current into the network at the same frequency and voltage conditions;

- at this time, the consumption of the pump is reduced as a function of the energy injected by the inverter which is in turn proportional to the irradiance received by the solar panels.

When the pump is deactivated:

- The micro-inverter detects that the frequency and voltage values are out of range and disconnects the power from the solar panels.

**Brief description of the contents of the drawings**

In order to complement the description that is being carried out and with the purpose of facilitating the understanding of the characteristics of the invention, the present description is accompanied by a set of drawings wherein, by way of a non-limiting example, the following has been represented:

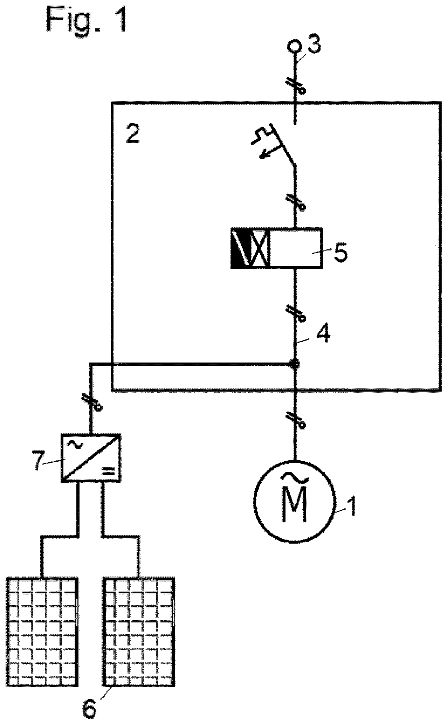

- Figure 1 shows a single-line diagram of an exemplary embodiment of the circuit for powering centrifugal pumps, according to the invention.

**Detailed explanation of embodiments of the invention**

In Figure 1, the circuit for powering centrifugal pumps according to the invention can be seen, where the centrifugal pump (1) is represented by the corresponding motor.

This power circuit comprises: a power panel (2) of the pump, which is connected to an alternating-current distribution network (3) and to the said pump (1) by means of a power line (4) provided with a timer (5) that regulates the operating time of the pump (1); a solar module comprising photovoltaic panels (6) and a solar micro-inverter (7) connected in parallel to the alternating-current bus of the pump (1), and which converts the direct current generated by the solar module into alternating current.

As mentioned above, when the micro-inverter detects voltage in the power line (4), due to the activation of the pump (1) by the timer (5), the micro-inverter (7) detects voltage in the power line, checks that the values of voltage, frequency, and phase-angle deviation are within the accepted values, connects to the network synchronising with it and injects current under the same frequency and voltage conditions; thereby reducing the current consumption from the network by the pump.

The number of photovoltaic panels (6) and the power of the micro-inverter (7) are based on the power of the pump (1), the power of the micro-inverter (7) being always slightly lower than that of the pump (1). For example, with a 750W and 600W power pump in the inverter a 670Wp solar generator is required or, with a 1,000W power pump and a 1,000W inverter also a 1,100Wp solar generator is required.

The impact on consumption is directly related to irradiance in the area depending on the season, for a pump such as the one in the first example mentioned above, with continuous operation of 12 hours between 7:00 a.m. and 06:00 p.m. in Valencia, a saving of 52% has been quantified.

Advantages of the system compared to the solutions currently used:

- It is applicable to any mains-connected centrifugal pump, without the need for a variable speed device.

- It is also applicable to any small power pump (from 500W).

- Low direct current voltage, less than 50V, compared to much higher voltages for variable speed device solutions, so it offers greater safety.

- Less required generator area: 3.4 m2 compared to 15 m2 in monophasic pumps.

- Reduced inverter cost compared to variable speed devices.

- It does not influence the flow rate of the installed pump designed according to the user's needs.

- Safety in the electrical service (mains connection), the flow does not depend on irradiance, energy savings do.

- Ideal for pumps with continuous operation in periods of high irradiance (spring and summer: swimming pools, irrigation pumps...).

- Savings according to latitude of up to 65% of daily consumption under the conditions mentioned in the previous item.

- Scalable according to pump power.

Once the nature of the invention as well as an example of preferred embodiment have been sufficiently described, it is stated for all pertinent purposes that the materials, form, size and arrangement of the elements

**EP 3 972 065 A1**

described are susceptible to changes, provided these do not involve an alteration of the essential features of the invention which are claimed below.

**Claims**

1. Electrical circuit for powering centrifugal pumps, comprising a power panel (2) of the pump (1), which is connected to an alternating-current distribution network (3) and to the said pump (1) through a power line (4) provided with a timer (5) that regulates the operating time of the pump (1), **characterised in that** it further comprises a solar module comprising photovoltaic panels (6) and a solar micro-inverter (7) connected in parallel to the alternating-current bus of the pump (1), which converts the direct current generated by the solar module into alternating current and injects same into the pump power line (4), with the same values of voltage, frequency and phase-angle deviation as the current coming from the distribution network (3), when the timer activates the operation of the pump.

2. Electrical circuit for powering centrifugal pumps, **characterised in that** the number of photovoltaic panels (6) and the power of the micro-inverter (7) are based on the power of the pump (1), the power of the micro-inverter (7) being slightly lower than that of the pump (1).

## Fig. 1

# INTERNATIONAL SEARCH REPORT

| | |
|---|---|
| International application No. | |
| PCT/ES2020/070469 | |

## A. CLASSIFICATION OF SUBJECT MATTER

*H02B1/00* (2006.01)

According to International Patent Classification (IPC) or to both national classification and IPC

## B. FIELDS SEARCHED

Minimum documentation searched (classification system followed by classification symbols)

Documentation searched other than minimum documentation to the extent that such documents are included in the fields searched

Electronic data base consulted during the international search (name of data base and, where practicable, search terms used)

EPODOC, INVENES, WPI

## C. DOCUMENTS CONSIDERED TO BE RELEVANT

| Category* | Citation of document, with indication, where appropriate, of the relevant passages | Relevant to claim No. |
|---|---|---|
| A | CN 208478886  U (FOSHAN ZHONGHUIDA ELECTRIC TECH CO LTD) 05/02/2019, Paragraphs [0022]-[0026] | 1, 2 |
| A | CN 208835541  U (JIANGSU HUAYAO ELECTRICAL EQUIPMENT CO LTD) 07/05/2019, Paragraphs [0022]-[0037] | 1, 2 |
| A | CN 204668784  U (WANG QINGMING) 23/09/2015, Paragraphs [0011]-[0014] | 1, 2 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 02/10/2020 | **(05/10/2020)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | L. García Aparicio Telephone No. 91 3493057 |

Form PCT/ISA/210 (second sheet) (January 2015)

## INTERNATIONAL SEARCH REPORT

Information on patent family members

| International application No. |
| --- |
| PCT/ES2020/070469 |

| Patent document cited in the search report | Publication date | Patent family member(s) | Publication date |
| --- | --- | --- | --- |
| CN208478886U U | 05.02.2019 | NONE | |
| CN208835541U U | 07.05.2019 | NONE | |
| CN204668784U U | 23.09.2015 | NONE | |

Form PCT/ISA/210 (patent family annex) (January 2015)

**EP 3 972 065 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 208478886 U
- CN 208835541 U
- CN 204668784